# EUROPÄISCHE PATENTSCHRIFT

(11) **EP 3 977 153 B1**
(45) Veröffentlichungstag und Bekanntmachung des Hinweises auf die Patenterteilung: **11.06.2025**
(21) Anmeldenummer: 20723387.5
(22) Anmeldetag: 30.04.2020
(51) Int. Cl.: G01S 7/03, H01P 3/12, H01Q 13/02, H01Q 1/12, B60J 1/02, G01S 7/02

(54) **FAHRZEUGSCHEIBE FÜR RADARUMFELDERFASSUNG UND VERFAHREN ZUR HERSTELLUNG**
VEHICLE PANE FOR RADAR ENVIRONMENT DETECTION, AND METHOD FOR PRODUCING SAME
VITRE DE VÉHICULE POUR DÉTECTION DU CHAMP PÉRIPHÉRIQUE PAR RADAR, ET PROCÉDÉ DE FABRICATION

(30) Priorität: 27.05.2019 DE 102019207760
(43) Veröffentlichungstag der Anmeldung: 06.04.2022
(73) Patentinhaber: VOLKSWAGEN AKTIENGESELLSCHAFT, 38440 Wolfsburg (DE)
(72) Erfinder: KURZ, Heiko Gustav, 30177 Hannover (DE)
(86) Internationale Anmeldenummer: PCT/EP2020/062128
(87) Internationale Veröffentlichungsnummer: WO 2020/239359

(56) Entgegenhaltungen:
- EP-A1- 2 340 185
- DE-A1- 102017 103 083
- US-A1- 2014 285 277
- "Physik", vol. 960, 1 January 1989, SPRINGER, Berlin, ISBN: 978-3-540-51196-0, article CHRISTIAN GERTHSEN ET AL: "9.1.4 Totalreflexion", pages: 989, XP055716879
- ALISTAIR SAMBELL ET AL: "Removal of Surface-Wave Induced Radiation Nulls for Patch Antennas Integrated with Vehicle Windscreens", IEEE TRANSACTIONS ON ANTENNAS AND PROPAGATION, IEEE SERVICE CENTER, PISCATAWAY, NJ, US, vol. 45, no. 1, 1 January 1997 (1997-01-01), XP011002884, ISSN: 0018-926X

## Beschreibung

Die Erfindung betrifft eine Fahrzeugscheibe für eine verbesserte Radarumfelderfassung und ein Verfahren für deren Herstellung. Die Erfindung betrifft insbesondere Windschutzscheiben, die für einen Einsatz mit einem Radarsensor vorgesehen sind, der eine Vielzahl von verteilt angeordneten Radarsende- und -empfangssensoren eingesetzt.

Im Bereich der passiven Sicherheitssysteme in Kraftfahrzeugen, sowie für das autonome Fahren in Stufe 4 und 5 ist die Unterscheidbarkeit der Verkehrsteilnehmer sowohl für den Schutz der Insassen als auch für den Schutz der anderen Verkehrsteilnehmer von besonderer Bedeutung. Hierzu ist eine sichere Umfelderfassung notwendig. Um diese zu garantieren, muss das Umfeld des Kraftfahrzeugs mit möglichst hoher Auflösung in allen drei Raumdimensionen erfasst werden. Moderne Kamera- und LIDAR-Systeme sind in der Lage, diese Umfelderfassung zu gewährleisten, werden jedoch in ihrer Qualität beeinflusst oder versagen gänzlich bei schlechten Sichtverhältnissen wie im Falle von Nebel, Schnee oder in der Dunkelheit. Radarsensoren unterliegen diesen Limitierungen hingegen nicht, müssen zur hochaufgelösten dreidimensionalen Bildgebung jedoch in einem Array mit einer Vielzahl von Sensoren angeordnet werden.

Darüber hinaus müssen die einzelnen Sensoren in einem solchen Array bezüglich ihrer Sende- und Empfangszeiten synchronisiert werden. Eine solche Synchronisation ist technisch äußerst anspruchsvoll. Daher ist es von Vorteil, wenn die einzelnen Radarsensoren so klein, einfach, flexibel, fehlertolerant, robust und preiswert wie möglich sind. Zu diesem Zweck sollte so wenig Elektronik wie möglich auf dem Radarsensor selbst verbaut sein, und die digitale Datenverarbeitung zentral innerhalb einer zentralen Steuerungseinheit geschehen.

Aus dem Stand der Technik ist es bekannt, Radarsysteme hinter einer Windschutzscheibe einzusetzen, die die Radarwellen durch Windschutzscheibe abstrahlen und empfangen.

EP 2 808 698 A2 zeigt ein solches System, bei dem die Windschutzscheibe eine Metallisationsschicht zum Abhalten von Infraroteinstrahlung ins Fahrzeuginnere aufweist. Da diese Metallisationsschicht Radarstrahlung blockiert, weist die Metallisationsschicht eine Aussparung vor dem Radarsystem auf.

Die DE 10 2017 103 083 A1 beschreibt einen elektromagnetischen Koppler, der Antennensignale für eine Breitbandantenne koppelt, die zwischen Glasschichten der Windschutzscheibe eines Fahrzeugs positioniert sind. Der Koppler umfasst einen ersten koplanaren Wellenleiter (CPW), der auf einer Seite einer Glasschicht gebildet ist, und einen zweiten CPW, der auf der anderen Glasschicht gebildet ist, wobei die erste und die zweite CPW Spiegel- oder Beinahe-Spiegel- und um 180° gedrehte Bilder voneinander sind. Sowohl der erste als auch der zweite CPW umfassen eine leitende Ebene, in der entfernte Abschnitte der Ebene einen breiten CPW-Abschnitt und einen engen CPW-Abschnitt definieren, die elektrisch miteinander gekoppelt sind, und wobei die verbleibenden Abschnitte der leitenden Ebene geerdete Ebenen sind, und wobei die elektromagnetischen Signale durch die Glasschicht zwischen breiten CPW- Abschnitten gekoppelt sind.

Die WO 2010/042 483 A1 beschreibt einen integrierten Radar-Kamera-Sensor, der eine Kamerasensorkomponente und eine Radarsensorkomponente umfasst, die beide in einem gemeinsamen Einzelmodulgehäuse untergebracht sind. Das Sensormodul enthält auch Verarbeitungsschaltungen zur Verarbeitung der Radarsensor- und Kameraausgänge. Das Sensormodul befindet sich hinter der Windschutzscheibe eines Fahrzeugs und kann einen Blend- und/oder elektromagnetischen Interferenz-Schutz (engl. glare and/or EMI shields) enthalten.

Um eine hohe Auflösung in sowohl im Azimut als auch in der Elevation zu erreichen sind eine Vielzahl von Sensoren notwendig. Diese in einem Kraftfahrzeug so anzuordnen und zu betreiben, dass die gewünschte hohe Auflösung auch für bildgebende oder bildverarbeitende Verfahren erreicht werden kann, ist bei den bekannten Fahrzeugen bisher noch nicht befriedigend gelöst. Die technische Aufgabe besteht darin die Anordnung von einer Mehrzahl von Sensoren und insbesondere einen Betrieb von einer Mehrzahl von Radarsensoren in Fahrzeugen mit verbesserten Sende- und Empfangseigenschaften zu ermöglichen Die Aufgabe wird erfindungsgemäß mit Hilfe einer Fahrzeugscheibe nach Anspruch 1 und einem Verfahren zum Herstellen einer Fahrzeugscheibe nach Anspruch 9 geschaffen. Vorteilhafte Ausführungsformen ergeben sich aus den Unteransprüchen.

Der Erfindung liegt die Idee zugrunde, die Fahrzeugscheibe mit einer Vielzahl von Radarwellenleitern auszubilden, über die Radarstrahlung oder Radarwellen beim Senden und Empfangen von und zu Radarsensoren durch die Fahrzeugscheibe hindurch verbessert übertragen werden. Hierbei werden die Radarwellenleiter über Brechungsindexvariationen in dem Scheibenkörper der Fahrzeugscheibe realisiert. Es ist allgemein bekannt, dass sich elektromagnetische Strahlung oder elektromagnetische Wellen, die sich in einem ersten Medium ausbreiten, welches einen ersten Brechungsindex aufweist, an einer Grenzfläche zu einem zweiten Medium, welches einen geringeren Brechungsindex als das erste Medium aufweist, und unter einem Winkel auf die Grenzfläche auftreten, der gemessen gegen eine Oberflächenormale auf der Grenzfläche einen vorgegebenen Winkel überschreitet, vollständig oder nahezu vollständig reflektiert wird.

Insbesondere wird somit eine Fahrzeugscheibe für eine Radarumfelderfassung geschaffen, welche einen Scheibenkörper mit einer Innenseite und einer Außenseite umfasst, wobei der Scheibenkörper eine Vielzahl von Radarwellenleitern zum Leiten von Radarstrahlung von der Innenseite zu der Außenseite und/oder umgekehrt umfasst, wobei die Radarwellenleiter über Brechungsindexvariationen eine Wellenleitung von Radarstrahlung herbeiführen.

Ein Verfahren zum Herstellen einer Fahrzeugscheibe für eine Radarumfelderfassung umfassend die Schritte: Herstellen oder Bereitstellen eines Scheibenkörpers mit einer Innenseite und einer Außenseite, wobei in dem Scheibenkörper eine Vielzahl von Radarwellenleitern zum Leiten von Radarstrahlung von der Innenseite zu der Außenseite und/oder umgekehrt ausgebildet werden, wobei die Radarwellenleiter über Brechungsindexvariationen eine Wellenleitung von Radarstrahlung herbeiführen

Radarwellenleiter können in der Fahrzeugscheibe, welche vorzugsweise eine Windschutzscheibe ist, über eine Brechungsindexvariation in dem Material des Scheibenkörpers ausgebildet sein. Hierdurch wird eine sehr gute Integration in die Fahrzeugscheibe erreicht, welches die mechanische Stabilität der Fahrzeugscheibe nicht beeinträchtigt. Somit sind bei einer Ausführungsform die Brechungsindexvariationen zumindest eines Radarwellenleiters der Vielzahl von Radarwellenleitern über eine Brechungsindexmodulationen in dem Material des Scheibenkörpers ausgebildet.

Das Ausbilden des Radarwellenleiters über Brechungsindexvariationen in dem Material des Scheibenkörpers kann bereits über lokale Veränderungen des Scheibenmaterials während der Herstellung des Scheibenkörpers erfolgen.

Eine besonders vorteilhafte Ausführungsform sieht vor, dass die Brechungsindexvariationen zumindest eines Radarwellenleiters der Vielzahl von Radarwellenleitern über eine Brechungsindexmodulationen in dem Material des Scheibenkörpers ausgebildet sind.

Bei einer Ausführungsform werden einer oder mehrere der Radarwellenleiter geschaffen, indem die Brechungsindexmodulationen mittels nichtlinearer Multiphotonenprozesse ausgebildet werden. Hierzu wird beispielsweise ein Fokus eines fokussierten Laser im Volumen des Materials des Scheibenkörpers bewegt wird. Im Fokus der Laserstrahlung wird der Brechungsindex des Materials aufgrund von nichtlinearen Multiphotonenprozessen lokal verändert. In dem der Fokus in dem Material an unterschiedliche Positionen bewegt wird, kann gezielt der Brechungsindex im Material lokal variiert werden. Über Multiphotonenprozesse wird eine Dichte des Materials und hierrüber der Brechungsindex lokal verändert.

Hierbei ist es möglich, unterschiedliche räumliche Strukturen der Brechungsindexvariationen zu schaffen. So wird es möglich, dass der zumindest eine Radarwellenleiter oder zumindest ein anderer der Vielzahl von Radarwellenleitern eine Hornantennenstruktur aufweist.

Vorzugsweise weisen alle Radarwellenleiter der Vielzahl von Radarwellenleitern eine Hornantennenstruktur auf. Hierdurch wird die Abstrahlung von Radarstrahlung über die einzelnen Lichtwellenleiter deutlich verbessert. Ferner wird auch die Wellenleitung von reflektierter Radarstrahlung verbessert, welche von der Außenseite zu der Innenseite des Scheibenkörpers geleitet wird.

Andere Ausführungsformen können andere Strukturen aufweisen, die eine Abstrahlung von Radarstrahlung oder ein Empfangen und Weiterleiten von Radarstrahlung an einen Sensor begünstigen. Hierdurch können wie bei einer hornantennenartigen Struktur Abstrahlungscharakteristika der abgestrahlten Radarstrahlung sowie die Empfangseigenschaften eines mit dem Radarwellenleiter gekoppelten Sensors beeinflusst werden.

Um auch eine Polarisation der abgestrahlten und empfangenen Radarstrahlung für die Umfelderfassung ausnutzen zu können, sind einzelne, mehrere oder alle der Radarwellenleiter so ausgebildet, dass sie eine Abstrahlung von Radarwellen oder Radarstrahlung begünstigen, die eine bestimmte Polarisationsrichtung aufweisen. Hierbei ist die Polarisationsrichtung maßgeblich, die die abgestrahlte Strahlung in einem Abstand von der Außenseite des Scheibenkörpers, d. h. in einem Fernfeld der Radarstrahlung aufweist. Hierbei kann es sich um linear polarisierte Radarstrahlung handeln, deren Polarisationsrichtung beabstandet von der Fahrzeugscheibe die Polarisationsrichtung des entsprechenden Radarwellenleiters angibt.

Die Polarisationsrichtungen, die hierüber einzelnen Radarwellenleitern zu geordnet werden können, sind somit bezüglich eines Koordinatensystems anzugeben, welches ortsfest mit dem Scheibenkörpers der Fahrzeugscheibe gekoppelt ist.

Neben dem bevorzugten Leiten von Radarwellen oder Radarstrahlung, die beim Austritt aus der Außenseite des Scheibenkörpers eine lineare Polarisationsrichtung aufweist, kann auch das Leiten von zirkular polarisierten Radarwellen bzw. zirkularpolarisierter Radarstrahlung oder andersartig polarisierte Radarstrahlung begünstigt werden.

Um eine Polarisation der Radarstrahlung und deren Veränderung bei der Reflexion bei der Messung des Umfelds berücksichtigen zu können, ist bei einer Ausführungsform vorgesehen, dass eine Mehrzahl von Radarwellenleitern der Vielzahl von Radarwellenleitern jeweils paarweise eine unterschiedliche Polarisation der an einer Außenseite der Fahrzeugscheibe austretenden und/oder eintretenden Radarstrahlung bei der Wellenleitung begünstigen.

Besonders bevorzugt gilt dies für jeweils einander benachbarte Radarwellenleiter der Vielzahl von Radarwellenleitern. Dies bedeutet, dass bei einer Anordnung einer Mehrzahl von Radarwellenleitern entlang einer Raumrichtung die jeweils paarweise zueinander benachbarten Radarwellenleiter Radarwellen oder Radarstrahlung einer unterschiedlichen Polarisationsrichtung bei der Wellenleitung begünstigen. Vorzugsweise gilt jedoch die Bedingung, dass die Mehrzahl von Radarwellenleitern jeweils paarweise eine unterschiedliche Polarisationsrichtung aufweisen für alle Radarwellenleiter der Mehrzahl von Radarwellenleitern, was bedeutet, dass diese jeweils eine ausgezeichnete Polarisationsrichtung der abgestrahlten bzw. empfangenen Radarstrahlung bei der Wellenleitung begünstigen, wobei die ausgezeichneten Polarisationsrichtungen alle verschieden sind.

Um eine Auswertung der über die verschiedenen Radarwellenleiter ausgesandten und abgestrahlten Radarwellen oder Radarstrahlung zu verbessern und zu einer hohen Umfeld Auflösung zu gelangen, ist eine zeitliche Korrelation zwischen den Abstrahlzeitpunkten und Empfangszeitpunkten der verschiedenen Radarwellenleiter notwendig. Dies bedeutet, dass zum Beispiel die Abstrahlen der Radarstrahlung zeitlich synchronisiert über die verschiedenen Radarwellenleiter, d. h. zeitlich abgestimmt, erfolgen soll. Insbesondere wenn die Radarstrahlung, die durch die einzelnen Radarwellenleiter abgestrahlt und empfangen wird, jeweils von individuell mit den einzelnen Radarwellenleitern gekoppelten Radarchips erzeugt und erfasst wird, ist es vorteilhaft die Abstände der Radarwellenleiter zueinander zu kennen und auch regelmäßig messen zu können.

Hierfür ist bei einer Ausführungsform vorgesehen, dass die Radarwellenleiter zumindest einer Gruppe der Vielzahl der Radarwellenleiter untereinander direkt oder indirekt über Kalibrationswellenleiter der Vielzahl von Kalibrationswellenleiter verbunden sind.

Eine Fahrzeugscheibe umfasst somit vorteilhafterweise eine Vielzahl von Kalibrationswellenleitern, wobei jeder der Kalibrationswellenleiter für ein Leiten von Radarstrahlung aufgrund von Totalreflexion zumindest zwischen zwei mittels des entsprechenden Kalibrationswellenleiters verbundenen Radarwellenleitern ausgebildet ist, wobei ein Teil der an der Innenseite des Schiebenkörpers in den einen der miteinander verbundenen Radarwellenleiter eintretenden Radarstrahlung an der Innenseite des Scheibenkörpers aus dem anderen der miteinander verbundenen Radarwellenleiter austritt oder umgekehrt.

Eine Ausführungsform der Erfindung sieht vor, dass die einander benachbarten Radarwellenleiter der zumindest einen Gruppe der Radarwellenleiter jeweils mit einem Kalibrationswellenleiter verbunden sind.

Vorzugsweise sind die Kalibrationswellenleiter so ausgebildet, dass von jedem der Radarwellenleiter dieser Gruppe, wenn über diesen Radarwellenleiter als einziges ein Radarsignal des mit diesem Radarwellenleiter gekoppelten Radarchips aussendet wird, über die Kalibrationswellenleiter alle anderen mit einem der Radarwellenleiter der Gruppe gekoppelten Radarchips ein "direktes Signal" erhalten, gegen das diese anderen Radarchips zeitlich die reflektierte empfangene Radarstrahlung synchronisieren können. D. h., die Radarwellenleiter sind hinsichtlich des Aussendens von Radarstrahlung alle miteinander verknüpft.

Die Kalibrationswellenleiter werden bei einer bevorzugten Ausführungsform mittels des Führens eines Fokuspunktes eines Lasers im Material des Schiebenkörpers zum Ausbilden von Brechungsindexvariationen mittels nichtlinearer Multiphotonenwechselwirkung ausgebildet.

Ebenso ist es möglich, die Kalibrationswellenleiter über lokale Veränderungen des Materials bei der Fertigung des Scheibenkörpers auszubilden. So wird Material, in dem die Wellenleitung der Radarstrahlung erfolgen soll, von Material mit einem geringeren Brechungsindex umgeben.

Bei wieder anderen Ausführungsformen werden die Kalibrationswellenleiter über ein Einfügen von Polymermaterial in den Scheibenkörpers ausgebildet.

Auch die Radarwellenleiter können teilweise oder alle mittels Polymermaterial ausgebildet werden, welches in Aussparungen des Scheibenkörpers eingefügt wird bzw. ist. So sieht eine Ausführungsform vor, dass zumindest einige der Radarwellenleiter mittels Polymermaterial ausgebildet sind, welches in Aussparungen des Scheibenkörpers eingefügt ist

Insbesondere um Ein- und Auskoppelverluste an einer Außenseite des Scheibenkörpers zu minimieren und gegebenenfalls auch als Schutz der Lichtwellenleiter ist bei einigen Ausführungsformen vorgesehen, dass die Radarwellenleiter der Vielzahl von Radarwellenleitern an einer Außenseite des Scheibenkörpers von mindestens einer Antireflexionsschicht überdeckt sind, deren Schichtstärke einem ganzzahligen Vielfachen eines Viertels der für die Wellenleitung vorgesehenen Radarwellenlänge in der Antireflexionsschicht beträgt. Der Scheibenkörpers wird somit an der Außenseite zumindest im Bereich der Radarwellenleiter mit einer entsprechenden Antireflexionsschicht beschichtet.

Die Antireflexionsschicht ist vorzugsweise brechungsindexangepasst, so dass eine Reflexion der Radarstrahlung beim Austritt/Eintritt in den Scheibenkörper minimiert ist. Dieses bedeutet dass der Brechungsindex für die Wellenlänge der Radarstrahlung angepasst, d.h. ein Material mit dem entsprechend benötigten Brechungsindex bei der Wellenlänge der Radarstrahlung gewählt wird oder der Brechungsindex des Materials der Antireflexionsschicht durch Materialzusätze für die Wellenlänge der Radarstrahlung entsprechend eingestellt wird, so dass die Transmission für die Radarstrahlung optimal ist. Es findet somit eine Vergütung für die Radarwellenlänge statt.

Andere Ausführungsformen können vorsehen, dass die Antireflexionsschicht mehrlagig ausgebildet wird oder ist, um ein Ein- und Auskoppeln von Radarstrahlung einer bestimmten Wellenlänge oder eines bestimmten Wellenlängenbereichs gegenüber anderen Wellenlängen oder Wellenlängenbereichen deutlich zu bevorzugen. Hierdurch werden Reflexionen minimiert und somit Ein- und Auskoppelverluste deutlich reduziert. Hierfür werden die Brechungsindices der einzelnen Lagen vorzugsweise über Simulationsrechnungen ausgewählt und bestimmt.

Andere Ausführungsformen und/oder Weiterbildungen können vorsehen, dass die Materialschichtstärken der lagen alternativ oder zusätzlich mit in die Simulation mit einbezogen werden.

Als besonders vorteilhaft haben sich Ausführungen erwiesen, bei denen zumindest eine Gruppe der Radarwellenleiter der Vielzahl von Radarwellenleitern gleichbeabstandet voneinander angeordnet sind. Vorzugsweise sind die Radarwellenleiter dieser zumindest einen Gruppe entlang einer Geraden angeordnet.

Um die mit den Radarwellenleitern gekoppelten Radarchips optisch für menschlichen Betrachter bei einer Ansicht der Fahrzeugscheibe, insbesondere von der Außenseite, zu verbergen ist bei einigen Ausführungsformen vorgesehen, dass der Scheibenkörper im Bereich der Vielzahl der Radarwellenleiter im sichtbaren Wellenlängenbereich mittels eines Aufdrucks im sichtbaren Wellenlängenbereich opak ausgebildet wird. Bei solchen Ausführungsform Formen ist somit vorteilhafterweise die Vielzahl der Radarwellenleiter in einem Schwarzdruckbereich des Scheibenkörpers angeordnet.

Nachfolgend wird die Erfindung unter Bezugnahme auf eine Zeichnung näher erläutert hierbei zeigen:
- Fig. 1: eine schematische Vorderansicht eines Fahrzeugs mit einer radarbasierten Umfelderfassung; und
- Fig. 2: eine Schnittansicht durch eine Fahrzeugscheibe mit zwei Vergrößerungsausschnitten, von denen der eine einen Radarwellenleiter an einer Außenseite der Fahrzeugscheibe und der andere an einer Innenseite der Fahrzeugscheibe darstellt.

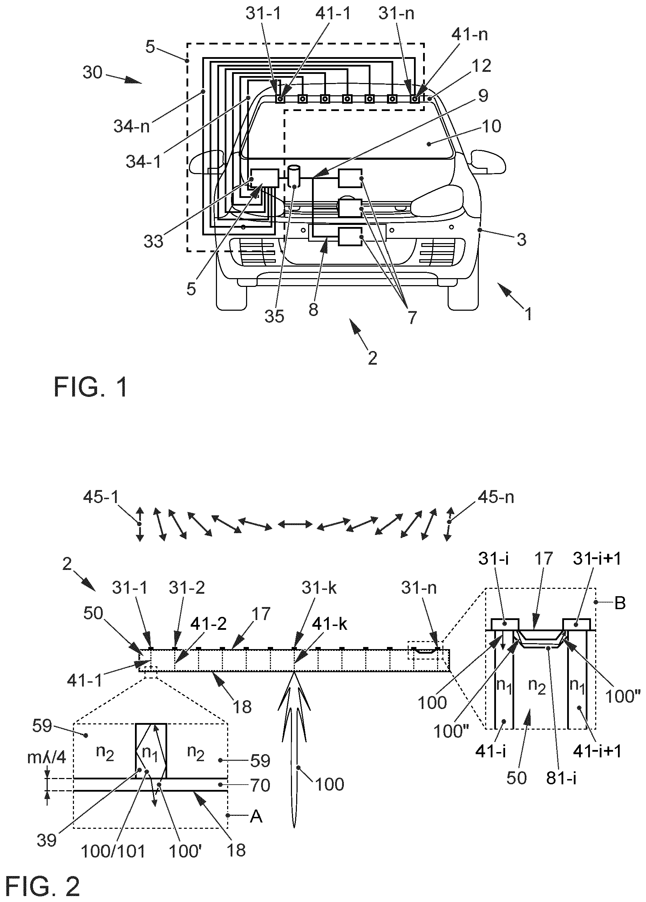

In Fig. 1 ist eine Vorderansicht eines Fahrzeugs 1 schematisch dargestellt. Das Fahrzeug umfasst ein Umfelderfassungssystem 5. Dieses Umfelderfassungssystem 5 umfasst mindestens eine Radarvorrichtung 30. Die Radarvorrichtung 30 weist in der dargestellten Ausführungsform eine Vielzahl von Radarchips 31-1 bis 31-n auf, die jeweils Radarstrahlung erzeugen und erfassen können. Bei einer bevorzugten Ausführungsform werden die von den einzelnen Radarchips 31-1 bis 31-n erfassten Radarsignale in einer Zentralenauswerteeinrichtung 33 ausgewertet. Hierfür sind die einzelnen Radarchips 31-1 bis 31-n informationstechnisch mit der Zentralauswerteeinrichtung 33 über Informationsleitungen 34-1 bis 34-n gekoppelt. Die Zentralauswerteeinrichtung 33 stellt Umfelddaten 35 für andere Einrichtungen 7 des Fahrzeugs 1 zur Verfügung. Beispielsweise kann dieses in Form einer bildlichen Darstellung erfolgen. Die Umfelddaten können Angaben über Positionen von Objekten relativ zum Fahrzeug 1, deren Relativgeschwindigkeit zum Fahrzeug, relativ Geschwindigkeiten zu anderen Objekten im Umfeld 2 des Fahrzeugs 1, eine Relativbeschleunigung bezogen auf das Fahrzeug 1 und/oder bezogen auf andere Objekte in dem Umfeld 2 umfassen. Die Umfelddaten 35 können jedoch auch Angaben über Positionen im Umfeld 2 des Fahrzeugs umfassen, an denen keine Objekte erfasst sind, die also frei sind.

In Fig. 1 sind die Informationsleitungen 34-1 bis 34-n teilweise außerhalb der Fahrzeugkontur gezeichnet. Es versteht sich jedoch für den Fachmann, dass die Informationsleitungen 34-1 bis 34-n selbstverständlich im Innern des Fahrzeugs ausgebildet sind. Ebenso sind die Zentralauswerteeinrichtung 33, die weiteren Einrichtungen 7 und Kommunikationsverbindungen 8, die beispielsweise als Fahrzeugbus 9 ausgebildet sind, lediglich schematisch dargestellt. Die Einrichtungen 7 können beliebige Einrichtungen des Fahrzeugs 1 sein, die Umfelddaten auswerten und/oder nutzen, beispielsweise Fahrassistenzsysteme, Steuereinrichtungen für ein autonomes Fahren etc.

Die Nachstellungen "-1, -2, -i, -m, -k,... -n" sollen jeweils gleichartige Objekte unterscheiden, wobei n, i, k, m jeweils natürliche Zahlen sind.

Die Radarchips 31-1 bis 31-n können mit oder ohne Antenne ausgestattet sein. Diese sind im Innern des Fahrzeugs 1, d. h. hinter einer Fahrzeugscheibe 10 angeordnet. Im vorliegenden Beispiel ist die Fahrzeugscheibe 10 eine Windschutzscheibe 11 des als Kraftfahrzeug 3 ausgebildeten Fahrzeugs 1. Im dargestellten Beispiel sind die Radarchips 31-1 bis 31-n an einer oberen Kante 13, vorzugsweise im Bereich eines Schwarzdrucks 12, angeordnet. Der Schwarzdruck 12 ist im sichtbaren Wellenlängenbereich opak, sodass die von außen betrachtet hinter der Windschutzscheibe 11 angeordneten Radarchips 31-1 bis 31-n für einen menschlichen Betrachter nicht oder nahezu nicht wahrnehmbar sind. Der Schwarzdruck 12 ist vorzugsweise so ausgeführt, dass dieser eine Ausbreitung von Radarwellen oder Radarstrahlung nicht nachteilig beeinflusst.

Um Dämpfungsverluste der von den Radarchips 31-1 bis 31-n erzeugten und ausgesandten Radarstrahlung sowie der zurückreflektierten Radarstrahlung 100' an der Fahrzeugscheibe zu minimieren, ist die Fahrzeugscheibe mit einer Vielzahl von Radarwellenleitern 41-1 bis 41-n ausgebildet. Bei der dargestellten Ausführungsform existiert für jeden Radarchip 31-1 bis 31-n jeweils genau ein Radarwellenleiter 41-1 bis 41-n. Bei anderen Ausführungsformen kann die Anzahl von Radarwellenleitern 41 einer Fahrzeugscheibe 10 größere als eine Anzahl von Radarchips 31 sein, die hinter der Fahrzeugscheibe 10 angeordnet sind.

In Fig. 2 ist eine schematische Schnittansicht durch eine Fahrzeugscheibe 10 dargestellt. Die Fahrzeugscheibe 10 umfasst einen Scheibenkörper 50. In dem Scheibenkörper 50 ist eine Vielzahl von Radarwellenleitern 41-1 bis 41-n ausgebildet. Diese sind vorzugsweise gleichbeabstandet angeordnet. Vorzugsweise entspricht der Abstand benachbarter Radarwellenleiter 41-i, 41-i+1 einem ganzzahligen vielfachen der Wellenlänge der verwendeten Radarstrahlung in dem Material des Scheibenkörpers.

Jeder der Wellenleiter 41 ist an einer Innenseite 17 der Fahrzeugscheibe 10 mit einem der Radarchips 31 gekoppelt. Die Kopplung erfolgt so, dass die von dem Radarchip 31 erzeugte Radarstrahlung 100 möglichst verlustfrei und Dämpfungsarm in den entsprechenden Radarwellenleiter eingekoppelt wird. Die Radarstrahlung 100 wird von dem Radarwellenleiter 31 durch den Scheibenkörper 50 der Fahrzeugscheibe 10 geleitet und an einer Außenseite 18 der Fahrzeugscheibe 10 in das Umfeld 2 des Fahrzeugs 1 abgestrahlt. An Objekten (nicht dargestellt) in dem Umfeld 2 des Fahrzeugs 1 wird ein Teil der ausgesandten Radarstrahlung 100 reflektiert. Die reflektierte Radarstrahlung 100' trifft erneut auf die Fahrzeugscheibe 10 und wird zumindest teilweise, möglichst verlustarm, in den Radarwellenleiter 41 eingekoppelt und durch diesen Radarwellenleiter 41 durch die Fahrzeugscheibe 10 hindurch zu der Innenseite 17 geleitet und dort aus gekoppelt, sodass die reflektierte Radarstrahlung 100' von dem Radarchip 31, der mit dem entsprechenden Radarwellenleiter 41 gekoppelt ist, erfasst werden kann.

Es versteht sich, dass die durch einen der Radarwellenleiter 31-i der Vielzahl der Radarwellenleiter 31-1 bis 31-n zur Außenseite 18 der Fahrzeugscheibe geleitete und dort abgestrahlte Radstrahlung, nachdem diese reflektiert wurde, nicht nur von dem Radarwellenleiter 41-i, sondern in der Regel auch von den anderen Radarwellenleitern 41-k (k≠i) durch die Fahrzeugscheibe 50 zu den entsprechend hiermit gekoppelten Radarchips 31-k geleitet wird.

Im Folgenden soll kurz erläutert werden, wie eine Radarwellenleitung im Volumen von Material, welches für den entsprechenden Wellenlängenbereich transparent ist, erfolgt. Sowohl Glas als auch die meisten transparenten Kunststoffe sind nicht nur im sichtbaren Wellenlängenbereich, sondern auch im Radarwellenlängenbereich transparent.

Ein Material ist im Volumen für eine Strahlung transparent, wenn eine geometrische Abbildungen durch das Volumen des Materials hindurch mit der Strahlung möglich sind. Es findet insbesondere keine Streuung der Strahlung in dem Volumen des Materials statt, welche z. B. bei Strahlung im sichtbaren Wellenlängenbereich zu einem diffusen Eindruck des Materials führen würde.

An einer Grenzfläche von einem ersten Material mit einem ersten Brechungsindex n₁ zu einem zweiten Material mit dem Brechungsindex n₂ , wobei der erste Brechungsindex n₁ größer als der zweite Brechungsindex n₂ ist, tritt bei flachen Eintrittswinkeln von sich in dem ersten Material ausbreitender Strahlung eine Totalreflexion der Strahlung auf. Diese Eigenschaft der Totalreflexion lässt sich ausnutzen, um Wellenleiter auszubilden. Diese aus dem sichtbaren Wellenlängenbereich bekannte Eigenschaft existiert auch im Bereich der Radarwellenlängen. Ein Radarwellenleiter ist somit ein Wellenleiter, der in der Lage ist elektromagnetische Wellen bzw. elektromagnetische Strahlung im Radarwellenlängenbereich, die sich im Material ausbreitet, aufgrund von Reflexionen an Brechungsindexvariationen zu leiten.

Dieses ist in einem vergrößerten Ausschnitt A eines Austrittsbereichs eines der Radarwellenleiter 41-1 an der Außenseite 18 der Fahrzeugscheibe 1 exemplarisch dargestellt.

Ein Radarstrahl 101 der Radarstrahlung 100, der sich in dem Material 39 des Radarwellenleiters 41-1 mit einem Brechungsindex n₁ ausbreitet, trifft unter einem flachen Winkel auf das Material 59 des Scheibenkörpers 50 mit dem Brechungsindex n₂. Der Radarstrahl 100 wird an der Grenzfläche zwischen dem Material 39 des Radarwellenleiters 41-1 und dem Material 59 des Scheibenkörpers 50 reflektiert. Hierdurch findet in dem Radarwellenleiter 31-1 eine Wellenleitung des Radarstrahls 101 und somit der Radarstrahlung 100 statt. Der Brechungsindex n_{2'} ist kleiner als der Brechungsindex n₁.

Die Wellenleitung der Radarstrahlung100, die in einem der Radarchips 31 erzeugt wird, durch die Fahrzeugscheibe 10 erfolgt somit, indem die Radarstrahlung 100 an der Innenseite 17 der Fahrzeugscheibe 10 in den zugehörigen Radarwellenleiter 41 eingekoppelt wird. In dem Material 39 des Radarwellenleiters 41 wird die Radarstrahlung 100 an einer Grenzfläche zu dem Material 59 des Scheibenkörpers 50 reflektiert und so verlustarm durch die Fahrzeugscheibe 10 geleitet. An der Außenseite 18 der Fahrzeugscheibe 10 tritt die Radarstrahlung 100 aus dem Radarwellenleiter 41 aus und wird in das Umfeld 2 des Fahrzeugs 1 abgestrahlt. Dort an Objekten (nicht dargestellt) reflektierte Radarstrahlung 100' wird in entgegengesetzter Richtung an der Außenseite 18 der Fahrzeugscheibe 2 in den Radarwellenleiter 41 eingekoppelt, an der Grenzfläche zu dem Material 59 des Scheibenkörpers 50 über Reflexionen geleitet und an der Innenseite 17 der Fahrzeugscheibe 10 aus dem Radarwellenleiter 41 ausgekoppelt und auf den Radarchip 31 zum Erfassen der reflektierten Radarstrahlung 100' geführt.

Um Reflexionsverluste beim Austreten der Radarstrahlung 100 aus dem Radarwellenleiter 41 zu reduzieren, weist die Fahrzeugscheibe 2 an der Außenseite 18 vorzugsweise eine Antireflexionsschicht 70 auf. Das Material 79 der Antireflexionsschicht 70 ist vorzugsweise hinsichtlich des Brechungsindex angepasst für die Wellenlänge der emittierten Radarstrahlung 100 in der Antireflexionsschicht 70.

Eine Schichtstärke 72 der Antireflexionsschicht 70 entspricht einem ganzzahligen Vielfachen eines Viertels der Wellenlänge λ der Radarstrahlung in dem Material 79 der Antireflexionsschicht 70. Bezeichnet man die Schichtstärke 72 mit s so gilt: s= m λ/4, wobei m eine natürliche Zahl ist.

Die Antireflexionsschicht 70 kann auch mehrlagig ausgebildet sein, wobei dann die einzelnen Lagen jeweils eine Schichtstärke aufweisen, die einem ganzzahligen vielfachen eines Viertels der Wellenlänge der Radarstrahlung in dem Material der entsprechenden Lage entspricht.

Bei der einfachen Ausführungsform eines Radarwellenleiters 41, wie dieser vereinfacht in Figur 2 und insbesondere dem Vergrößerungsausschnitt A dargestellt ist, wird davon ausgegangen, dass der Radarwellenleiter eine zylindrische Form aufweist. Es ist jedoch bevorzugt, dass der Lichtwellenleiter 41 eine komplexere Struktur aufweist, beispielsweise die einer Hornantenne. Dies bedeutet, dass die Brechungsindexvariationen zwischen dem Material des Radarwellenleiters und dem Material des Scheibenkörpers komplexere geometrische Strukturen im Volumen des Scheibenkörpers darstellen. Hierdurch wird es möglich, eine Abstrahlungsrichtung und Strahlcharakteristik der abgestrahlten Radarstrahlung 100 zu beeinflussen. Ebenso ist es auch möglich, eine Polarisationsrichtung der abgestrahlten Radarstrahlung zu beeinflussen.

Bei der dargestellten Ausführungsform in Figur 2 ist eine Richtung 45-i der Polarisation für jeden der Radarwellenleiter 41-i der Vielzahl der Radarwellenleiter schematisch angedeutet, unter der die Radarstrahlung 100 aus dem jeweiligen Radarwellenleiter 41-i an der Außenseite 18 der Fahrzeugscheibe 10 austreten.

Die Polarisationsrichtungen 45-1 bis 45-n der einzelnen Radarwellenleiter 41-1 bis 41-n ändern sich entlang der linearen Anordnung der Radarwellenleiter schrittweise. Der Winkel unterschied der Polarisationsrichtungen zwischen benachbarten Radarwellenleitern 41-i und 41-i+1 ist somit konstant. Die Polarisationsrichtungen sind hier in der Zeichnungsebene dargestellt, obwohl sie sich auf eine Ebene senkrecht hierzu beziehen.

Werden die Radarwellenleiter 41 so ausgebildet, dass sie die Polarisationsrichtung der geleiteten Radarstrahlung 100 beeinflussen, so können polarimetrische Messungen durchgeführt werden.

Um die Auswertung die einzelnen erfassten Radarsignale der reflektierten Radarstrahlung 100' mit einer hohen Auflösung zu erleichtern und/oder zu ermöglichen, sind vorzugsweise Kalibrationswellenleiter 81, 81-1 bis 81-m vorzugsweise an der Innenseite 17 der Fahrzeugscheibe 10 zwischen den Radarwellenleitern 41 ausgebildet. Aus Gründen der Übersichtlichkeit ist in Fig. 2 nur ein Kalibrationswellenleiter 81 dargestellt. Es ist jedoch zwischen benachbarten Radarwellenleitern jeweils ein Kalibrationswellenleiter ausgebildet, wie in dem Vergrößerungsausschnitt B dargestellt ist. Jeder Radarwellenleiter, der zwei benachbarte Radarwellenleiter besitz ist mit diesen beiden jeweils mit einem eigenen, also insgesamt zwei oder mehr, Kalibrationswellenleiter gekoppelt.

Der Vergrößerungsausschnitt B zeigt zwei benachbarte Radarwellenleiter 41-i, 41-i+1, sowie deren hiermit gekoppelten Radarchips 31-i, 31-i+1. Der Kalibrationswellenleiter 81-i ist so ausgebildet, dass dieser einen Teil 100" der von der Innenseite 17 der Fahrzeugscheibe 10 in den Radarwellenleiter 41-i eingekoppelten Radarstrahlung 100 zu dem benachbarten Radarwellenleiter 41-i+1 leitet, sodass zumindest ein Teil dieser durch den Kalibrationswellenleiter geleiteten Radarstrahlung 100" von dem Radarchip 31-i+1 erfasst werden kann.

Vorzugsweise ist jeder der Radarwellenleiter 41-i mit seinen unmittelbar benachbarten Radarwellenleiter 41-i-1,41-i+1 über Kalibrationswellenleiter 81-i-1 und 81-i gekoppelt. Hierüber ist eine Synchronisation und Kalibration zwischen den einzelnen Radarchips 31 möglich.

Die Radarwellenleiter 41 als auch die Kalibrationswellenleiter 81 können auf unterschiedliche Weise in die Fahrzeugscheibe 10 integriert werden.

Bei einer Ausführungsform werden in der Fahrzeugscheibe zunächst Aussparungen, beispielsweise für die Radarwellenleiter Durchgangsöffnungen durch die Fahrzeugscheibe, ausgebildet. Diese werden anschließend mit einem Material ausgefüllt, welches einen höheren Brechungsindex n₁ im Verhältnis zu dem Brechungsindex n₂ des Materials der Fahrzeugscheibe aufweist. Hierfür eignet sich beispielsweise Polymermaterial, welches in Aussparungen des aus Glas hergestellten Scheibenkörpers 50 der Fahrzeugscheibe 10 eingefügt wird.

Auch die Kalibrationswellenleiter 81 können auf diese Weise hergestellt werden, indem Aussparungen in dem Scheibenkörpers 50 der Fahrzeugscheibe 10 mit Polymermaterial gefüllt werden.

Als besonders vorteilhaft und flexibel hat sich die Herstellung der Radarwellenleiter 41 und/oder der Kalibrationswellenleiter 81 mithilfe von nichtlinearen Multiphotonenprozessen erwiesen. Mit fokussierter Laserstrahlung lässt sich in transparenten Materialien dessen Dichte und hierüber der Brechungsindex im Fokus der Laserstrahlung lokal verändern. Indem man den Fokus der Laserstrahlung durch das Volumen des Scheibenkörpers führt, können so komplexe Brechungsindexvariationen in den Scheibenkörper eingebracht werden, sodass sowohl Radarwellenleiter 41 als auch Kalibrationswellenleiter 81 auf diese Art und Weise ausgebildet werden können. Die Eigenschaften der Radarwellenleiter 41 können hierbei in vielfältiger Weise beeinflusst werden. So können die Radarwellenleiter 41 beispielsweise eine Hornantennenstruktur erhalten und/oder deren Polarisationseigenschaften eingestellt und beeinflusst werden.

Ein besonderer Vorteil liegt darin, dass in bereits fertig produzierte Fahrzeugscheiben mit hoher Präzision Radarwellenleiter oder Kalibrationswellenleiter eingebracht werden können. Hierbei können beliebig komplexe Brechungsindexvariationen realisiert werden.

Auch über das Einfügen von Material, insbesondere Polymermaterial in Aussparungen des Scheibenkörpers können bei geeigneter Formung der Aussparungen die Radarwellenleiter mit Hornantennenstrukturen ausgebildet werden und/oder die Polarisationseigenschaften der Radarwellenleiter eingestellt werden.

Darüber hinaus ist es möglich, bereits bei der Herstellung des Scheibenkörpers lokal die Brechungsindexeigenschaften zu variieren und hierüber die Radarwellenleiter oder die Kalibrationswellenleiter unmittelbar bei der Herstellung des Scheibenkörpers auszubilden. Hierzu wird Material, in welchem eine Radarwellenleitung erwünscht ist, von Material mit einem geringeren Brechungsindex umgeben.

Die Antireflexionsschicht 70, die ein oder mehrlagig ausgebildet werden kann, wird vorzugsweise vollflächig auf eine Außenseite des Scheibenkörpers 50 aufgebracht. Um Lichtbrechungen an der Antireflexionsschicht im sichtbaren Wellenlängenbereich zu vermeiden, ist die Antireflexionsschicht 70 Brechungsindex angepasst an das Material 59 des Scheibenkörpers 50. Eine mehrlagige Antireflexionsschicht weist eine Kombination aus Lagen unterschiedlicher Materialien und somit unterschiedlichen Brechungsindices auf, um Phasensprünge an den Grenzflächen oder Übergängen zu erzeugen und hierdurch eine Transmission für die Radarwellenlänge oder für einen Wellenlängenbereich um die Radarwellenlänge sowie gegebenenfalls für einen Winkelbereich der Emission der Radarstrahlung bei der Radarwellenlänge zu optimieren. Die Schichtenfolge wird vorzugsweise mittels Simulationsrechnungen bestimmt.

Mit einer Radarvorrichtung 30, die Radarchips 31 in Kombination mit Radarwellenleitern 41 nutzt, welche hoch präzise in eine Fahrzeugscheibe 10 integriert sind, lassen sich Auflösungen des Umfelds 2 des Fahrzeugs 1 erreichen, die mit denen eines LiDAR-(Light Detection and Ranging)-Systems vergleichbar sind.

Besonders hohe Auflösungen lassen sich erreichen, wenn die Radarwellenleiter mit Kalibrationswellenleitern für eine zeitliche Synchronisation und Kalibration miteinander verbunden sind.

Bei der hier beschriebenen Ausführungsform sind die Radarwellenleiter entlang der oberen Kante 13 der als Windschutzscheibe 11 ausgebildeten Fahrzeugscheibe 10 ausgebildet. Zusätzlich oder alternativ können die Radarwellenleiter auch an einer rechten Seitenkante 14, einer linken Seitenkante 15 und/oder einer unteren Kante 16 der Fahrzeugscheibe ausgebildet sein. Auch an anderen Positionen können grundsätzlich Radarwellenleiter und hier zwischen Kalibrationswellenleiter ausgebildet sein.

Besonders bevorzugt ist die Fahrzeugscheibe 2 in einem Bereich, in dem die Radarwellenleiter 41 ausgebildet sind, mit einer opaken Farbe, beispielsweise einer schwarzen Farbe bedruckt, um die mit den Radarwellenleitern 41 gekoppelten Radarchips 31 zu verbergen.

Bei der beschriebenen Ausführungsform ist die Fahrzeugscheibe 10 eine Windschutzscheibe 11. Die Fahrzeugscheibe kann jedoch auch eine beliebige andere Scheibe des Fahrzeugs sein, beispielsweise eine Heckscheibe, eine Seitenscheibe etc. In einem solchen Fall werden die Radarwellenleiter beispielsweise benachbart zu einer A-Säule, B-Säule, C-Säue und/oder einer oberen oder unteren Kante der Scheibe ausgebildet.

Die mit der Vielzahl der Radarwellenleiter gekoppelten Radarchips können zu einer oder verschiedenen Radarvorrichtungen gehören.

Bei geneigt eingebauten und oder gekrümmten Fahrzeugscheiben können Richtungen, entlang derer eine Wellenleitung der Radarstrahlung in den Radarwellenleitern erfolgt, von den lokalen Oberflächennormalen der Fahrzeugscheibe an der Innenseite und/oder der Außenseite der Fahrzeugscheibe verschieden sein. Das heißt, die Radarwellenleiter sind in einem solchen Fall nicht senkrecht zur Fahrzeugscheibe orientiert.

### Bezugszeichenliste

- 1: Fahrzeug
- 2: Umfeld
- 3: Kraftfahrzeug
- 5: Umfelderfassungssystem
- 7: Einrichtungen
- 8: Kommunikationsverbindungen
- 9: Fahrzeugbus
- 10: Fahrzeugscheibe
- 11: Windschutzscheibe
- 12: Schwarzdruck
- 13: obere Kante
- 14: rechte Seitenkante
- 15: linke Seitenkante
- 16: untere Kante
- 17: Innenseite
- 18: Außenseite
- 30: Radarvorrichtung
- 31, 31-1 bis 31-n: Radarchips
- 33: Zentralenauswerteeinrichtung
- 34-1 bis 34-n: Informationsleitungen
- 35: Umfelddaten
- 39: Material des Radarwellenleiters
- 41, 41-1 bis 41-n: Radarwellenleiter
- 45- 1 bis 45-n: Polarisationsrichtungen
- 50: Scheibenkörper
- 59: Material des Scheibenkörpers
- 70: Antireflexionsschicht
- 72: Schichtstärke
- 79: Material der Antireflexionsschicht
- 81: Kalibrationswellenleiter
- 100: Radarstrahlung
- 100': reflektierte Radarstrahlung
- 100": Teil der eingekoppelten Radarstrahlung
- 101: Radarstrahl

## Patentansprüche

1. Fahrzeugscheibe (10) für eine Radarumfelderfassung umfassend:
einen Scheibenkörper (50) mit einer Innenseite (17) und einer Außenseite (18),
**dadurch gekennzeichnet, dass**
der Scheibenkörper (50) eine Vielzahl von Radarwellenleitern (41, 41-1 bis 41-n) zum Leiten von Radarstrahlung von der Innenseite (17) zu der Außenseite (18) und/oder umgekehrt umfasst, wobei die Radarwellenleiter (41, 41-1 bis 41-n) über Brechungsindexvariationen eine Wellenleitung von Radarstrahlung (100) herbeiführen.

2. Fahrzeugscheibe (10) nach Anspruch 1, **dadurch gekennzeichnet, dass** die Brechungsindexvariationen zumindest eines Radarwellenleiters (41, 41-1 bis 41-n) der Vielzahl von Radarwellenleitern (41, 41-1 bis 41-n) über Brechungsindexmodulationen in dem Material (59) des Scheibenkörpers (50) ausgebildet sind.

3. Fahrzeugscheibe (10) nach Anspruch 2, **dadurch gekennzeichnet, dass** die Brechungsindexmodulationen mittels nichtlinearer Multiphotonenprozesse ausgebildet sind.

4. Fahrzeugscheibe (10) nach einem der vorangehenden Ansprüche, **dadurch gekennzeichnet, dass** der zu mindestens eine Radarwellenleiter (41, 41-1 bis 41-n) oder zumindest ein anderer der Vielzahl von Radarwellenleitern (41, 41-1 bis 41-n) eine Hornantennenstruktur aufweist.

5. Fahrzeugscheibe (10) nach einem der vorangehenden Ansprüche, **dadurch gekennzeichnet, dass** eine Mehrzahl von Radarwellenleitern (41, 41-1 bis 41-n) der Vielzahl von Radarwellenleitern (41, 41-1 bis 41-n) jeweils paarweise eine unterschiedliche Polarisation der an einer Außenseite der Fahrzeugscheibe (10) austretenden und/oder eintretenden Radarstrahlung bei der Wellenleitung begünstigen.

6. Fahrzeugscheibe (10) nach einem der vorangehenden Ansprüche, **gekennzeichnet durch** eine Vielzahl von Kalibrationswellenleitern, wobei jeder der Kalibrationswellenleiter für ein Leiten von Radarstrahlung aufgrund von Totalreflexion zumindest zwischen zwei mittels des entsprechenden Kalibrationswellenleiters verbundenen Radarwellenleitern (41, 41-1 bis 41-n) ausgebildet ist, wobei ein Teil der an der Innenseite des Schiebenkörpers in den einen der miteinander verbundenen Radarwellenleiter (41, 41-1 bis 41-n) eintretenden Radarstrahlung an der Innenseite des Scheibenkörpers (50) aus dem anderen der miteinander verbundenen Radarwellenleiter (41, 41-1 bis 41-n) austritt oder umgekehrt.

7. Fahrzeugscheibe (10) nach einem der voran gehenden Ansprüche, **dadurch gekennzeichnet, dass** zumindest einige der Radarwellenleiter (41, 41-1 bis 41-n) mittels Polymermaterial ausgebildet sind, welches in Aussparungen des Scheibenkörpers (50) eingefügt sind.

8. Fahrzeugscheibe (10) nach einem der vorangehenden Ansprüche, **dadurch gekennzeichnet, dass** die Radarwellenleiter (41, 41-1 bis 41-n) der Vielzahl von Radarwellenleitern (41, 41-1 bis 41-n) an einer Außenseite des Scheibenkörpers (50) von mindestens einer Antireflexionsschicht überdeckt sind, deren Schichtstärke einem ganzzahligen Vielfachen eines Viertels der für die Wellenleitung vorgesehenen Radarwellenlänge in der Antireflexionsschicht beträgt.

9. Verfahren zum Herstellen einer Fahrzeugscheibe (10) für eine Radarumfeld Erfassung umfassend die Schritte:
Herstellen oder Bereitstellen eines Scheibenkörpers (50) mit einer Innenseite und einer Außenseite, wobei in dem Scheibenkörper (50) eine Vielzahl von Radarwellenleitern (41, 41-1 bis 41-n) zum Leiten von Radarstrahlung von der Innenseite zu der Außenseite und/oder umgekehrt ausgebildet werden, wobei die Radarwellenleiter (41, 41-1 bis 41-n) über Brechungsindexvariationen eine Wellenleitung von Radarstrahlung herbeiführen.

10. Verfahren nach Anspruch 9, **dadurch gekennzeichnet, dass** Brechungsindexmodulationen mittels nichtlineare Multiphotonenprozesse in einem Material (59) des Scheibenkörpers (50) ausgebildet werden, indem ein Fokus eines fokussierten Lasers im Volumen des Materials des Scheibenkörpers (50) bewegt wird.

11. Verfahren nach einem der Ansprüche 9 oder 10, **dadurch gekennzeichnet ,dass** zwischen den Reflexionswellenleitern Kalibrationswellenleiter ausgebildet werden.

## Claims

1. Vehicle window (10) for radar environment detection, comprising:
a window body (50) having an inner side (17) and an outer side (18),
**characterized in that**
the window body (50) comprises a plurality of radar waveguides (41, 41-1 to 41-n) for guiding radar radiation from the inner side (17) to the outer side (18) and/or vice versa, the radar waveguides (41, 41-1 to 41-n) bringing about waveguiding of radar radiation (100) via refractive index variations.

2. Vehicle window (10) according to claim 1, **characterized in that** the refractive index variations of at least one radar waveguide (41, 41-1 to 41-n) of the plurality of radar waveguides (41, 41-1 to 41-n) are formed via refractive index modulations in the material (59) of the window body (50).

3. Vehicle window (10) according to claim 2, **characterized in that** the refractive index modulations are formed by means of nonlinear multiphoton processes.

4. Vehicle window (10) according to any of the preceding claims,
**characterized in that** the at least one radar waveguide (41, 41-1 to 41-n) or at least another one of the plurality of radar waveguides (41, 41-1 to 41-n) has a horn antenna structure.

5. Vehicle window (10) according to any of the preceding claims,
**characterized in that** a majority of radar waveguides (41, 41-1 to 41-n) of the plurality of radar waveguides (41, 41-1 to 41-n) each in pairs promote a different polarization of the radar radiation emerging from and/or entering an outer side of the vehicle window (10) during the waveguiding.

6. Vehicle window (10) according to any of the preceding claims,
**characterized by** a plurality of calibration waveguides, each of the calibration waveguides being designed to guide radar radiation due to total reflection at least between two radar waveguides (41, 41-1 to 41-n) connected by means of the corresponding calibration waveguide, a portion of the radar radiation that enters one of the interconnected radar waveguides (41, 41-1 to 41-n) on the inner side of the window body emerging from the other of the interconnected radar waveguides (41, 41-1 to 41-n) on the inner side of the window body (50) or vice versa.

7. Vehicle window (10) according to any of the preceding claims,
**characterized in that** at least some of the radar waveguides (41, 41-1 to 41-n) are formed by means of polymer material which is inserted into recesses of the window body (50).

8. Vehicle window (10) according to any of the preceding claims,
**characterized in that** the radar waveguides (41, 41-1 to 41-n) of the plurality of radar waveguides (41, 41-1 to 41-n) are covered on an outer side of the window body (50) by at least one anti-reflection layer, the layer thickness of which is an integer multiple of a quarter of the radar wavelength provided for the waveguide in the anti-reflection layer.

9. Method for producing a vehicle window (10) for radar environment detection, comprising the steps of:
producing or providing a window body (50) having an inner side and an outer side, wherein a plurality of radar waveguides (41, 41-1 to 41-n) for guiding radar radiation from the inner side to the outer side and/or vice versa are formed in the window body (50), wherein the radar waveguides (41, 41-1 to 41-n) bring about waveguiding of radar radiation via refractive index variations.

10. Method according to claim 9, **characterized in that** refractive index modulations are formed by means of non-linear multiphoton processes in a material (59) of the window body (50) by moving a focus of a focused laser in the volume of the material of the window body (50).

11. Method according to one of claims 9 or 10, **characterized in that** calibration waveguides are formed between the reflection waveguides.

## Revendications

1. Vitre de véhicule (10) pour une détection de champ périphérique par radar comprenant :
un corps de vitre (50) comportant une face intérieure (17) et une face extérieure (18),
**caractérisé en ce que**
le corps de vitre (50) comprend une pluralité de guides d'ondes radar (41, 41-1 à 41-n) permettant le guidage d'un rayonnement radar de la face intérieure (17) vers la face extérieure (18) et/ou inversement, dans laquelle les guides d'ondes radar (41, 41-1 à 41-n) provoquent un guidage d'ondes d'un rayonnement radar (100) par l'intermédiaire de variations d'indice de réfraction.

2. Vitre de véhicule (10) selon la revendication 1, **caractérisée en ce que** les variations d'indice de réfraction d'au moins un guide d'ondes radar (41, 41-1 à 41-n) de la pluralité de guides d'ondes radar (41, 41-1 à 41-n) sont réalisées par l'intermédiaire de modulations d'indice de réfraction dans le matériau (59) du corps de vitre (50).

3. Vitre de véhicule (10) selon la revendication 2, **caractérisée en ce que** les modulations d'indice de réfraction sont réalisées au moyen de processus multiphotoniques non linéaires.

4. Vitre de véhicule (10) selon l'une des revendications précédentes,
**caractérisée en ce que** l'au moins un guide d'ondes radar (41, 41-1 à 41-n) ou au moins un autre guide d'ondes radar de la pluralité de guides d'ondes radar (41, 41-1 à 41-n) présente une structure d'antenne en cornet.

5. Vitre de véhicule (10) selon l'une des revendications précédentes,
**caractérisée en ce que** plusieurs guides d'ondes radar (41, 41-1 à 41-n) de la pluralité de guides d'ondes radar (41, 41-1 à 41-n) favorisent, respectivement par paire, une polarisation différente du rayonnement radar sortant et/ou entrant sur une face extérieure de la vitre de véhicule (10) au niveau du guide d'ondes.

6. Vitre de véhicule (10) selon l'une des revendications précédentes,
**caractérisée par** une pluralité de guides d'ondes de calibrage, dans laquelle chacun des guides d'ondes de calibrage est réalisé pour un guidage d'un rayonnement radar sur la base d'une réflexion totale entre au moins deux guides d'ondes radar (41, 41-1 à 41-n) connectés au moyen des guides d'ondes de calibrage correspondants, dans laquelle une partie du rayonnement radar entrant dans l'un des guides d'ondes radar (41, 41-1 à 41-n) interconnectés au niveau de la face intérieure du corps de vitre sort de l'autre des guides d'ondes radar (41, 41-1 à 41-n) interconnectés au niveau de la face intérieure du corps de vitre (50), ou inversement.

7. Vitre de véhicule (10) selon l'une des revendications précédentes,
**caractérisée en ce qu'**au moins certains des guides d'ondes radar (41, 41-1 à 41-n) sont réalisés au moyen d'un matériau polymère inséré dans des évidements du corps de vitre (50).

8. Vitre de véhicule (10) selon l'une des revendications précédentes,
**caractérisée en ce que** les guides d'ondes radar (41, 41-1 à 41-n) de la pluralité de guides d'ondes radar (41, 41-1 à 41-n) sont recouverts sur une face extérieure du corps de vitre (50) par au moins une couche antiréfléchissante dont l'épaisseur de couche est un multiple entier d'un quart de la longueur d'onde radar prévue pour le guide d'ondes dans la couche antiréfléchissante.

9. Procédé de fabrication d'une vitre de véhicule (10) pour une détection de champ périphérique par radar comprenant les étapes consistant à :
fabriquer ou fournir un corps de vitre (50) comportant une face intérieure et une face extérieure, dans lequel une pluralité de guides d'ondes radar (41, 41-1 à 41-n) est réalisée dans le corps de vitre (50) pour le guidage d'un rayonnement radar de la face intérieure vers la face extérieure et/ou inversement, dans lequel les guides d'ondes radar (41, 41-1 à 41-n) provoquent un guidage d'ondes d'un rayonnement radar par l'intermédiaire de variations d'indice de réfraction.

10. Procédé selon la revendication 9, **caractérisé en ce que** des modulations d'indice de réfraction sont réalisées au moyen de processus multiphotoniques non linéaires dans un matériau (59) du corps de vitre (50) en déplaçant un foyer d'un laser focalisé dans le volume du matériau du corps de vitre (50).

11. Procédé selon l'une des revendications 9 ou 10, **caractérisé en ce que** des guides d'ondes de calibrage sont réalisés entre les guides d'ondes de réflexion.
